# FASCICULE DE BREVET EUROPEEN

(11) **EP 0 488 871 B1**
(45) Date de publication et mention de la délivrance du brevet: **16.02.1994**
(21) Numéro de dépôt: 91403177.8
(22) Date de dépôt: 25.11.1991
(51) Int. Cl.: B64C 25/34

(54) **Dispositif de verrouillage d'un support de roues orientables**
Verriegelungsvorrichtung einer schwenkbaren Radhalterung
Swivelling wheel mounting locking system

(30) Priorité: 30.11.1990 FR 9015079
(43) Date de publication de la demande: 03.06.1992
(73) Titulaire: MESSIER BUGATTI, F-78140 Velizy Villacoublay (FR)
(72) Inventeur: Veaux, Jacques, F-92320 Chatillon (FR); Derrien, Michel, F-78000 Versailles (FR)
(74) Mandataire: Fruchard, Guy

(56) Documents cités:
- FR-A- 1 018 918
- FR-A- 1 391 911
- US-A- 3 845 919

## Description

La présente invention concerne un dispositif de verrouillage d'un support de roues orientables.

On sait qu'avec l'augmentation croissante de la dimension des avions, il est nécessaire d'utiliser un nombre croissant de roues sur les atterrisseurs principaux afin de mieux répartir la charge de l'avion. Par ailleurs, afin de permettre de cabrer suffisamment un avion sans pour autant allonger de façon démesurée les jambes des trains d'atterrissage, on utilise maintenant de plus en plus des trains d'atterrissage comportant une poutre montée pour basculer à l'extrémité inférieure de la jambe de l'atterrisseur, les roues de l'atterrisseur étant réparties le long de la poutre basculante.

Lorsqu'on augmente le nombre de roues il est donc nécessaire d'augmenter la longueur de la poutre basculante, mais celle-ci a une orientation fixe parallèle à l'axe longitudinal de l'avion de sorte que lors du roulage au sol, et en particulier des virages lors du roulage, les roues sont soumises à un effort de ripage important. Pour minimiser ces efforts de ripage, on a envisagé de disposer au moins l'un des trains de roues sur un essieu pivotant dont l'orientation est commandée en même temps que l'orientation de l'atterrisseur auxiliaire servant à diriger l'avion lors du roulage au sol. Dans ce cas, il est toutefois nécessaire de verrouiller l'essieu pivotant afin de s'assurer que celui-ci a une orientation satisfaisante lors du décollage et de l'atterrissage de l'avion ou tout simplement lors d'un roulage à vitesse élevée, par exemple au-dessus de 30 km/h.

La présente invention concerne donc un dispositif de verrouillage d'un essieu monté pour pivoter sur une poutre.

Selon l'invention ce dispositif comporte des moyens de verrouillage montés pour pivoter par rapport à la poutre et ayant des extrémités associées à l'essieu pour bloquer l'essieu pour une première position des moyens de verrouillage et libérer l'essieu par pivotement des moyens de verrouillage vers une seconde position, et des moyens de commande de la position des moyens de verrouillage.

Selon un premier mode de réalisation, les moyens de verrouillage comprennent deux ensembles articulés disposés de part et d'autre de la poutre, chaque ensemble articulé comprenant un levier articulé à une bielle télescopique, une extrémité de chaque ensemble articulé étant fixée de façon articulée à la poutre, et une extrémité opposée étant fixée de façon articulée à l'essieu, et les moyens de commande sont disposés pour fixer l'orientation relative des leviers par rapport aux bielles télescopiques, les bielles télescopiques étant en position totalement comprimée lorsque les moyens de verrouillage sont dans la première position. De préférence, dans la première position les leviers sont sensiblement dans l'alignement des bielles télescopiques.

Selon un autre mode de réalisation de l'invention, les moyens de verrouillage comprennent une plaque de verrouillage montée pour pivoter par rapport à la poutre et ayant des extrémités venant au contact de surfaces de butée portées par l'essieu lorsque la plaque de verrouillage est dans la première position. De préférence, les surfaces de butée sont inclinées par rapport à un axe de pivotement de la plaque de verrouillage pour favoriser un dégagement de la plaque de verrouillage dans un sens du déverrouillage.

Dans les deux modes de réalisation, les moyens de commande comprennent de préférence un jeu de deux biellettes articulées l'une à l'autre et un vérin de commande de la position des biellettes, la course des biellettes étant de préférence limitée soit par une butée des biellettes soit par une butée des ensembles articulés.

D'autres caractéristiques et avantages de l'invention apparaîtront à la lecture de la description qui suit de deux modes de réalisation particuliers non limitatifs de l'invention en liaison avec les dessins ci-joints parmi lesquels :
- la figure 1 est une vue de dessus du premier dispositif de verrouillage selon l'invention, en position verrouillée,
- la figure 2 est une vue de côté du dispositif de la figure 1,
- la figure 3 est une vue de dessus analogue à celle de la figure 1 pour une position déverrouillée du dispositif de verrouillage,
- la figure 4 est une vue de dessus d'un second mode de réalisation de l'invention.

En référence aux figures, le dispositif de verrouillage selon l'invention est destiné à bloquer un essieu 1 sur lequel sont montés des trains de roues, non représentés, par rapport à une extrémité d'une poutre basculante 2 fixée à l'extrémité inférieure d'un train d'atterrissage.

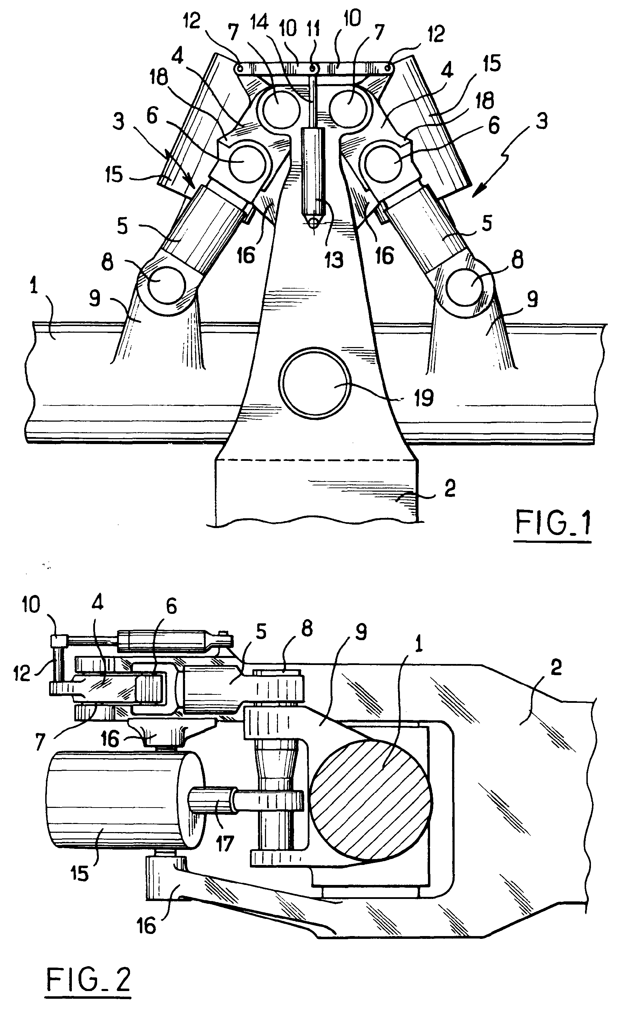

Dans le premier mode de réalisation illustré par les figures 1 à 3, le dispositif de verrouillage comporte deux ensembles articulés généralement désignés en 3 disposés de part et d'autre de la poutre 2 et comportant chacun un levier 4 et une bielle télescopique 5. Chaque levier 4 est articulé à la bielle télescopique 5 correspondante par un axe d'articulation 6. L'extrémité d'un levier 4 opposée à l'axe d'articulation 6 est fixée de façon articulée à la poutre 2 autour d'un axe d'articulation 7. L'extrémité opposée de l'ensemble articulé 3 est fixée de façon articulée à l'essieu 1 autour d'un axe d'articulation 8 porté par un bossage 9 solidaire de l'essieu 1. La position relative des leviers 4 et des bielles télescopiques 5 est commandée par un jeu de deux biellettes 10 articulées l'une à l'autre à l'une de leurs extrémités autour d'un axe d'articulation 11. L'extrémité des biellettes 10 opposée à l'axe d'articulation 11 est reliée de façon articulée à l'un des leviers 4 autour d'un axe d'articulation 12 écarté du point d'articulation 7 des leviers 4 par rapport à la poutre 2. Un vérin de commande 13 est fixé sur la poutre 2 et l'extrémité de la tige 14 de ce vérin de commande est fixée de façon articulée sur l'axe d'articulation 11 commun aux deux biellettes 10.

Par ailleurs, dans le mode de réalisation illustré, l'orientation de l'essieu 1 est commandée par des vérins d'orientation 15 montés pour pivoter sur des bossages 16 solidaires de la poutre 2 et comportant une tige 17 dont l'extrémité est montée de façon articulée sur l'axe d'articulation 8 porté par l'essieu 1.

Dans la première position illustrée par la figure 1, le vérin de commande 13 est alimenté dans le sens de sortie de la tige de vérin 14 de sorte que les ensembles articulés 3 sont repoussés par l'intermédiaire des biellettes 10 jusqu'à ce que des butées 18 portées par les leviers 4 et les bielles télescopiques 5 soient en contact. Dans cette première position les leviers 4 et les bielles télescopiques 5 sont de préférence sensiblement alignées et les biellettes 10 sont également sensiblement alignées. Les bielles télescopiques 5 sont en position totalement comprimée. Dans cette position des moyens de verrouillage, l'essieu 1 est maintenu dans une position neutre, c'est-à-dire perpendiculaire à la poutre 2. Si un effort est exercé sur l'essieu 1 pour modifier son orientation, cet effort se transmet par la bielle télescopique 5 et le levier 4 qui lui est associé jusqu'à l'axe d'articulation 7 porté par la poutre 2 mais sans aucune modification de l'orientation de l'essieu 1 puisque celui-ci se trouve bloqué par la mise en butée des bielles télescopiques 5 et le blocage de l'orientation relative des leviers 4 par rapport aux bielles télescopiques 5.

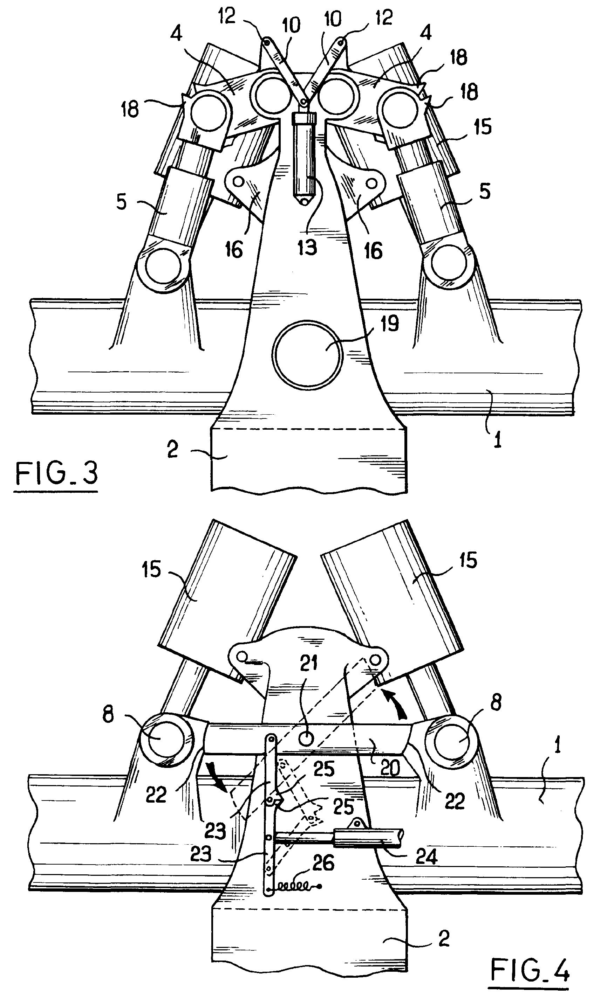

La figure 3 illustre le dispositif dans la position déverrouillée. Dans cette position, le vérin de commande 13 a été rétracté, ce qui a provoqué un désalignement des biellettes 10 et le rapprochement des axes d'articulation 12 associés à ces biellettes. Par voie de conséquence les leviers 4 ont pivoté et les bielles télescopiques 5 se sont détendues jusqu'à une position moyenne. Afin que les deux ensembles articulés 3 pivotent de façon symétrique même si l'un d'entre eux présente un point dur, on prévoit de préférence une butée pour les leviers 4 dans leur position pivotée représentée sur la figure 2. Par exemple, la course des leviers 4 est limitée par un appui des bossages portant les axes d'articulation 12 contre la poutre 2.

Dans cette position, on comprendra qu'un effort exercé sur l'essieu 1, par exemple un effort exercé par les vérins d'orientation 15, provoque une rétraction de l'une des bielles télescopiques 5 et un allongement de la bielle télescopique opposée ce qui permet un pivotement de l'essieu 1 autour de son axe de pivotement 19. Le mouvement de pivotement de l'essieu 1 est limité par la course des bielles télescopiques 5 à partir de leur position médiane. Le vérin 13 est un vérin double effet ou un vérin à simple effet agissant dans le sens de la rétraction du vérin, des moyens de rappel étant alors prévus pour ramemer le dispositif vers la position de verrouillage en l'absence d'alimentation. Les moyens de rappel sont par exemple un ressort disposé à l'intérieur du vérin pour ramener celui-ci en position détendue ou des ressorts ayant une extrémité fixée à la poutre 2 et une extrémité opposée fixée aux leviers 4 ou aux biellettes 10 pour les ramener vers la première position.

La figure 4 illustre un second mode de réalisation dans lequel le dispositif de verrouillage comporte cette fois une plaque de verrouillage 20 montée pour pivoter sur la poutre 2 autour d'un axe de pivotement 21. Dans une première position représentée en trait plein sur la figure 4, les extrémités de la plaque de verrouillage 20 sont au contact de surfaces de butée 22 portées par l'essieu. De préférence, comme illustré, les surfaces de butée 22 ne sont pas dirigées exactement vers l'axe de pivotement 21 mais sont au contraire décalées par rapport à celui-ci afin de favoriser un déverrouillage de la plaque de verrouillage 20 lors d'une rotation de celle-ci comme illustré par les flèches sur la figure 4. Les moyens de commande de la position de la plaque de verrouillage 1 comportent comme précédemment deux biellettes 23 articulées l'une à l'autre, l'une des biellettes 23 étant cette fois reliée de façon articulée à la plaque de verrouillage 20 et l'autre biellette 23 étant reliée de façon articulée à la poutre 2. La position relative des biellettes 23 est déterminée par un vérin de commande 24 relié de façon articulée à l'une des biellettes de commande 23. Dans la position de verrouillage illustrée en trait plein sur la figure 4, la plaque de verrouillage 20 est maintenue en contact avec les butées 22 par les biellettes 23 qui comportent des butées 25 en contact l'une avec l'autre, les biellettes 23 étant de préférence sensiblement alignées. Dans la position déverrouillée illustrée en pointillé, le vérin de commande 24 étant rétracté, les biellettes 23 sont repliées l'une vers l'autre ce qui provoque le pivotement de la plaque de verrouillage 20 autour de l'axe de pivotement 21. Dans le cas où le vérin 24 est un vérin à simple effet, un ressort 26 est de préférence prévu entre l'une des biellettes 23 et la poutre 2 pour ramener les biellettes 23 vers une position sensiblement alignée.

On remarquera que les deux modes de réalisation de l'invention illustrés permettent non seulement de verrouiller l'essieu 1 lorsque celui-ci est en position neutre mais également de forcer celui-ci vers une position neutre lorsqu'il est légèrement décalé par rapport à cette position.

Bien entendu l'invention n'est pas limitée aux modes de réalisation décrits mais est susceptible de variantes de réalisation qui apparaîtront à l'homme de métier sans sortir du cadre des revendications qui suivent.

En particulier, bien que dans les exemples décrits on ait prévu d'amener les leviers 4 en butée contre les bielles télescopiques 5 au moyen des butées 18, ou les biellettes 23 en butée l'une contre l'autre au moyen des butées 25, le mouvement de ces organes peut être limité d'une façon quelconque, par exemple en les amenant en appui contre une partie de la poutre 2.

De même, une fois déverrouillé, l'essieu 1 peut être manoeuvré par des moyens quelconques.

## Revendications

1. Dispositif de verrouillage d'un essieu (1) monté pour pivoter sur une poutre (2) caractérisé en ce qu'il comporte des moyens de verrouillage (4, 5 ; 20) montés pour pivoter par rapport à la poutre (2) et ayant des extrémités associées à l'essieu (1) pour bloquer l'essieu (1) pour une première position des moyens de verrouillage et libérer l'essieu par pivotement des moyens de verrouillage vers une seconde position, et des moyens de commande (10, 13 ; 23, 24) de la position des moyens de verrouillage.

2. Dispositif de verrouillage selon la revendication 1 caractérisé en ce que les moyens de verrouillage comprennent deux ensembles (3) articulés disposés de part et d'autre de la poutre (2), chaque ensemble articulé comprenant un levier (4) articulé à une bielle télescopique (5), une extrémité de chaque ensemble articulé étant fixée de façon articulée à la poutre, et une extrémité opposée étant fixée de façon articulée à l'essieu, et les moyens de commande sont disposés pour fixer l'orientation relative des leviers (4) par rapport aux bielles télescopiques (5), les bielles télescopiques (5) étant en position totalement comprimée lorsque les moyens de verrouillage sont dans la première position.

3. Dispositif de verrouillage selon la revendication 2 caractérisé en ce que dans la première position les leviers (4) sont sensiblement dans l'alignement des bielles télescopiques (5).

4. Dispositif de verrouillage selon la revendication 2 caractérisé en ce que les moyens de commande comprennent un jeu de deux biellettes (10) articulées l'une à l'autre et ayant chacune une extrémité articulée à l'un des leviers (4) en un point de celui-ci écarté d'un point d'articulation (7) du levier (4) par rapport à la poutre (2), et un vérin de commande (13) de la position des biellettes (10).

5. Dispositif de verrouillage selon la revendication 4, caractérisé en ce que dans la première position des moyens de verrouillage les ensembles articulés (3) sont en butée et les deux biellettes de commande (10) sont sensiblement alignées l'une avec l'autre.

6. Dispositif de verrouillage selon la revendication 1, caractérisé en ce que les moyens de verrouillage comprennent une plaque de verrouillage (20) montée pour pivoter par rapport à la poutre (2) et ayant des extrémités venant au contact de surfaces de butée (22) portées par l'essieu (1) lorsque la plaque de verrouillage (20) est dans la première position.

7. Dispositif de verrouillage selon la revendication 6, caractérisé en ce que les surfaces de butée (22) sont inclinées par rapport à un axe de pivotement (21) de la plaque de verrouillage pour favoriser un dégagement de celle-ci dans un sens de déverrouillage.

8. Dispositif de verrouillage selon la revendication 6, caractérisé en ce que les moyens de commande comprennent un jeu de deux biellettes (23) articulées l'une à l'autre, l'une des biellettes ayant par ailleurs une extrémité articulée à la plaque de verrouillage (20) et l'autre biellette ayant une extrémité articulée à la poutre (2), et un vérin de commande (24) de la position des biellettes (23).

9. Dispositif de verrouillage selon la revendication 7 caractérisé en ce que dans la première position des moyens de verrouillage, les biellettes de commande (23) sont en butée et sensiblement alignées l'une avec l'autre.

## Patentansprüche

1. Vorrichtung zum Verriegeln einer Achse (1), die an einem Träger (2) schwenkbar gelagert ist, dadurch **gekennzeich****net,** daß sie Verriegelungsmittel (4, 5; 20) umfaßt, die für eine Schwenkbewegung relativ zum Träger (2) gelagert sind und mit der Achse (1) verbundene Enden haben, um die Achse (1) für eine erste Stellung der Verriegelungsmittel zu blockieren und die Achse durch Verschwenken der Verriegelungsmittel in eine zweite Stellung freizugeben, und daß sie Steuermittel (10, 13; 23, 24) zur Steuerung der Stellung der Verriegelungsmittel umfaßt.

2. Vorrichtung nach Anspruch 1, dadurch **gekennzeichnet,** daß die Verriegelungsmittel zwei Gelenkanordnungen (3) umfassen, die beiderseits des Trägers (2) angeordnet sind, wobei jede Gelenkanordnung einen Hebel (4) hat, der an einem Teleskoppleuel (5) angelenkt ist, und wobei ein Ende jeder Gelenkanordnung an dem Träger und das entgegengesetzte Ende an der Achse gelenkig befestigt ist, und daß die Steuermittel so angeordnet sind, daß sie die Ausrichtung der Hebel (4) relativ zu den Teleskoppleueln (5) festlegen, wobei die Teleskoppleuel (5) sich in ihrer vollständig zusammengedrückten Stellung befinden, wenn die Verriegelungsmittel ihre erste Stellung einnehmen.

3. Vorrichtung nach Anspruch 2, dadurch **gekennzeichnet,** daß die Hebel (4) in der ersten Stellung im wesentlichen mit den Teleskoppleueln (5) fluchten.

4. Vorrichtung nach Anspruch 2, dadurch **gekennzeichnet,** daß die Steuermittel ein Paar von Gelenkstangen (10), die gelenkig miteinander verbunden und mit einem ihrer Enden jeweils an einem der Hebel (4) in einem Punkt desselben angelenkt sind, der von der Gelenkstelle (7) des Hebels (4) an dem Träger (2) entfernt ist, und einen Steuerzylinder (13) zur Steuerung der Stellung der Gelenkstangen (10) umfassen.

5. Vorrichtung nach Anspruch 4, dadurch **gekennzeichnet,** daß in der ersten Stellung der Verriegelungsmittel die Gelenkanordnungen (3) am Anschlag sind und die beiden Steuergelenkstangen (10) miteinander fluchten.

6. Vorrichtung nach Anspruch 1, dadurch **gekennzeichnet,** daß die Verriegelungsmittel eine Verriegelungsplatte (20) umfassen, die für eine Schwenkbewegung relativ zum Träger (2) gelagert ist und Enden hat, die mit Anschlagflächen (22) an der Achse (1) in Kontakt treten, wenn die Verriegelungsplatte (20) sich in der ersten Stellung befindet.

7. Vorrichtung nach Anspruch 6, dadurch **gekennzeichnet,** daß die Anschlagflächen (22) relativ zu einer Schwenkachse (21) der Verriegelungsplatte geneigt sind, um eine Freigabe derselben in einer Entriegelungsrichtung zu erleichtern.

8. Vorrichtung nach Anspruch 6, dadurch **gekennzeichnet,** daß die Steuermittel ein Paar von Gelenkstangen (23) umfassen, die gelenkig miteinander verbunden sind, wobei die eine der Gelenkstangen mit einem Ende an der Verriegelungsplatte (20) angelenkt ist und die andere Gelenkstange mit einem Ende an den Träger (2) angelenkt ist, und daß die Steuermittel ferner einen Steuerzylinder (24) zur Steuerung der Position der Gelenkstangen (23) umfassen.

9. Vorrichtung nach Anspruch 7, dadurch **gekennzeichnet,** daß in der ersten Stellung der Verriegelungsmittel die Steuergelenkstangen (23) am Anschlag anliegen und im wesentlichen miteinander fluchten.

## Claims

1. A device for locking an axle (1) mounted to swivel relative to a beam (2), the device being characterized in that it includes locking means (4, 5; 20) mounted to pivot relative to the beam (2) and having ends associated with the axle (1) to lock the axle (1) when the locking means are in a first position and to release the axle by pivoting the locking means towards a second position, together with control means (10, 13; 23, 24) for controlling the position of the locking means.

2. A locking device according to claim 1, characterized in that the locking means comprise two hinged assemblies (3) disposed on either side of the beam (2), each hinged assembly comprising a lever (4) hinged to a telescopic connecting rod (5), one end of each hinged assembly being hinged to the beam, and an opposite end being hinged to the axle, and the control means are disposed to fix the direction of the levers (4) relative to the telescopic connecting rods (5), the telescopic connecting rod (5) being in a fully compressed position when the locking means are in the first position.

3. A locking device according to claim 2, characterized in that in the first position the levers (4) are substantially in alignment with the telescopic connecting rods (5).

4. A locking device according to claim 2, characterized in that the control means comprise a set of two links (10) hinged to each other and each having one end hinged to one of the levers (4) at a point thereof which is offset from the point where the lever (4) is hinged (7) relative to the beam (2), together with a control actuator (13) for controlling the position of the links (10).

5. A locking device according to claim 4, characterized in that in the first position the locking means of the hinged assemblies (3) are in abutment and the two control links (10) are substantially in alignment with each other.

6. A locking device according to claim 1, characterized in that the locking means comprise a locking plate (20) mounted to pivot relative to the beam (2) and having its ends coming into contact with abutment surfaces (22) carried by the axle (1) when the locking plate (20) is in the first position.

7. A locking device according to claim 6, characterized in that the abutment surfaces (22) are inclined relative to a pivot axis (21) of the locking plate to facilitate disengagement of the locking plate in the unlocking direction.

8. A locking device according to claim 6, characterized in that the control means comprise a set of two links (23) hinged to each other, one of the links having an end hinged to the locking plate (20) and the other link having an end hinged to the beam (2), together with a control actuator (24) for controlling the position of the links (23).

9. A locking device according to claim 7, characterized in that in the first position of the locking means, the control links (23) are in abutment and are substantially in alignment with each other.
